# EUROPEAN PATENT APPLICATION

(11) **EP 3 644 619 A1**
(43) Date of publication of application: **29.04.2020**
(21) Application number: 18306383.3
(22) Date of filing: 23.10.2018
(51) Int. Cl.: H04N 21/6587, H04N 21/262, H04L 29/06, H04N 21/4728, H04N 21/845, H04L 29/08, H04N 21/218, H04N 21/2343, H04N 21/81, H04N 19/597, H04N 19/70, H04N 19/167

(54) **METHOD AND APPARATUS FOR RECEIVING A TILE-BASED IMMERSIVE VIDEO**

(71) Applicant: InterDigital CE Patent Holdings, 75017 Paris (FR)
(72) Inventor: TAIBI, Charline, 35776 Cesson-Sévigné Cedex (FR); TRAVERT, Serge, 35776 Cesson-Sévigné Cedex (FR); HOUDAILLE, Rémi, 35776 Cesson-Sévigné Cedex (FR)
(74) Representative: Huchet, Anne

(57) **Abstract**

A salient idea is to build partial views of an immersive video which include only an envelope of successive positions of a viewport corresponding to specific movements, and therefore excluding parts of the immersive video that are not crossed by the viewport during those specific movements. By requesting such a partial view the client terminal provides an enhanced experience to a user moving according to a specific movement while minimizing the network overhead.

## Description

### 1. TECHNICAL FIELD

The present disclosure relates to the streaming of spherical videos (so called immersive or Virtual Reality ((VR) 360° videos) to an end device through a delivery network.

### 2. BACKGROUND ART

VR 360° videos offer an immersive experience wherein a user can look around using a VR head-mounted display (HMD) or can navigate freely within a scene on a flat display by controlling the viewport with a controlling apparatus (such as a mouse or a remote control).

Such a freedom in spatial navigation requires that the whole 360° scene is delivered to a player (embedded within the HMD or TV set or smartphone or device such as a set top box) configured to extract the video portion to be visualized depending on the position of the viewport within the scene. Therefore, a high throughput is necessary to deliver the video. Indeed, it is commonly admitted that a physical space field of vision surrounded by the 360° horizontal direction and 180° vertical direction can be entirely covered by a user within a minimum set of twelve viewports. To offer an unrestricted VR 360° video service in 4K resolution, a video stream equivalent to twelve 4K videos has to be provided.

Therefore, one main issue relies on the efficient transmission of VR 360° videos over bandwidth constrained networks with an acceptable quality of immersive experience (i.e. avoiding freeze screen, blockiness, black screen, etc.). Currently, for delivering a VR 360° video service in streaming, a compromise has to be reached between immersive experience, resolution of video and available throughput of the content delivery network.

The majority of known solutions streaming VR 360° videos provides the full 360° scene to the end device, but only less than 10% of the whole scene is presented to the user. Since delivery networks have limited throughput, the video resolution is decreased to meet bandwidth constraints.

Other known solutions mitigate the degradation of the video quality by reducing the resolution of the portion of the 360° scene arranged outside of the current viewport of the end device. Nevertheless, when the viewport of the end device is moved upon user's action to a lower resolution area, the displayed video suffers from a sudden degradation.

The present disclosure has been devised with the foregoing in mind.

### 3. SUMMARY

According to a first aspect, there is provided an apparatus comprising:
- a network interface for receiving an immersive video streamed over a network, the immersive video being spatially tiled with a plurality of tiles, a tile covering a portion of a scene of the immersive video, said immersive video being temporally divided into a plurality of video segments, a video segment comprising a plurality of tile segments, a tile segment being associated with a tile of the plurality of tiles;
- means for requesting at least one tile segment associated with at least one tile of the immersive video, the at least one tile being selected to cover an envelope of successive positions of a viewport;
- means for receiving the tile segment.

According to a second aspect, there is provided a method for receiving an immersive video spatially tiled with a plurality of tiles, a tile covering a portion of a scene of the immersive video, said immersive video being temporally divided into a plurality of video segments, a video segment comprising a plurality of tile segments, a tile segment being associated with a tile of the plurality of tiles, the method comprising:
- requesting at least one tile segment associated with at least one tile of the immersive video, the at least one tile being selected to cover an envelope of successive positions of a viewport,
- receiving the at least one tile segment.

### 4. BRIEF DESCRIPTION OF THE DRAWINGS

- **Figure 1** is a schematic diagram of an exemplary client server network architecture wherein the disclosed principles might be implemented;
- **Figure 2** is a schematic block diagram of an exemplary client terminal wherein the disclosed principles might be implemented;
- **Figure 3** illustrates an exemplary movement of a viewport according to a specific and non-limiting embodiment of the disclosed principles;
- **Figure 4** is flow chart of an exemplary method for receiving a spatially tiled immersive video according to a specific and non-limiting embodiment of the disclosed principles;
- **Figures 5A, 5B and 5C** illustrate three variants of an envelope of successive positions of a viewport according to a specific and non-limiting embodiment of the disclosed principles;
- **Figures 6** illustrates a fourth variant of an envelope of successive positions of a viewport according to a specific and non-limiting embodiment of the disclosed principles.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the term " interconnected " is defined to mean directly connected to or indirectly connected with through one or more intermediate components. Such intermediate components may include both hardware and software based components. The term "interconnected" is not limited to a wired interconnection and also includes wireless interconnection.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

The present disclosure is depicted with regard to a streaming environment to deliver an immersive video (such as a 360° video or a panoramic video) to a client terminal through a delivery network.

A spherical multimedia content (e.g. a VR 360° video) is represented by a sphere which center corresponds to the position of the acquisition device which has acquired the immersive video. The immersive video is spatially tiled with a plurality of tiles, a tile covering a portion of a scene of the immersive video, the plurality of tiles covering the whole scene of the immersive video. Different variants are possible for spatially tiling the immersive video. In a first variant the immersive video is spatially tiled using great circles only (a great circle, also known as an orthodrome, is the intersection of the sphere and a plane that passes through the center point of the sphere). Depending on the number of great circles used in the spatial tiling, the number and the size of the tiles vary. In a second variant, the immersive video is spatially tiled using azimuth circles (which are great circles) and elevation circles (which are not great circles but orthogonal to the azimuth circles). In yet another variant, the immersive video is spatially tiled by taking the content of the immersive video into account. For example, a tile comprises two points of interest of the content having a relation between them. By relation, it is meant that a user viewing one of them will very likely navigate in the content for viewing the second one. Embedding such related points of interest in a same tile enables to maintain frequent content navigations in a same tile allowing to preserve the network bandwidth and to enhance the user experience. Any technique for spatially tiling the immersive video by taking the content into account is compatible with the disclosed principles.

According to different variants and without limitations, a tile may be defined by:
- a position of the center point of the tile, defined for example by its coordinates in an orthogonal space, or by its azimuth and elevation;
- a type of the tile, defining how the spatial tiling was done, and/or determining the shape of the tile;
- optionally the tilt of the tile if any;
- the azimuth and elevation range of the tile (e.g. its spanning angles).

A spherical content is generally projected on a plane before being made available to receivers in order to reuse encoding and content processing techniques. There is a direct correspondence between a tile of the spherical content and a projected tile of the projected content. There is also a direct correspondence between a position of a viewport in the spherical content and a position of the view port in the projected content For the sake of clarity, the present principles are illustrated and described on the projected planar content spatially tiled with planar tiles from both the tiling and the viewport positions perspectives, but a position of any point or region in the planar content corresponds to a respective position of that point or region in the spherical content.

The spatially tiled immersive video is further temporally divided in a plurality of video segments, a video segment comprising a plurality of tile segments, each tile segment being associated with a tile of the plurality of tiles.

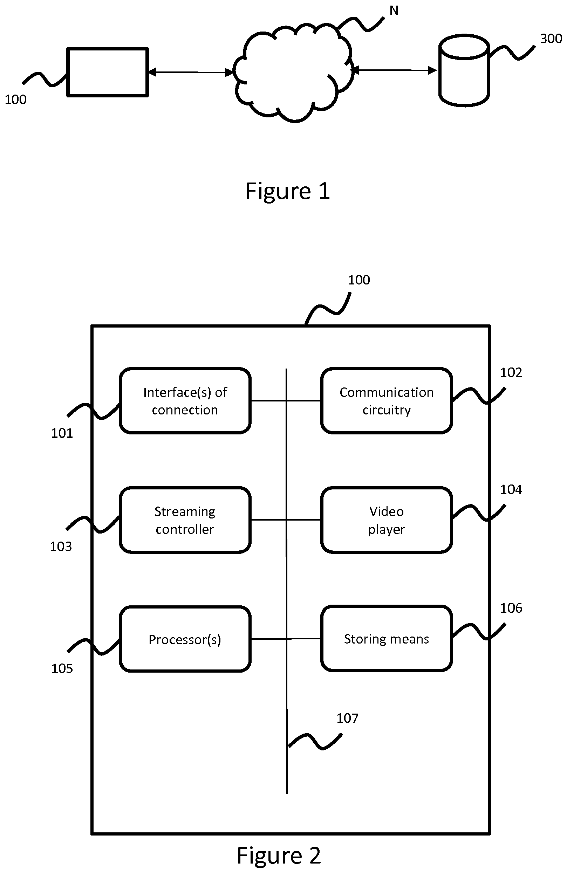

As shown in **Figure 1****,** the client server network architecture, wherein the present principles might be implemented, comprises a client terminal 100 and one or more servers 300 (only one is represented on **Figure 1****).** The servers 300 store the immersive video as a set tile segments, wherein each tile segment corresponds to a time interval and to a spatial tile of the immersive video.

The client terminal 100, connected to the server 300 through a delivery network N, may wish to request an immersive video stored on a remote server 300. The delivery network may comprise a local area network (such as a home network) interconnected to a wide area network (such as the Internet) via a gateway, or may be based on any type of network architecture. The present principles are applicable to any kind of communication network.

The server 300 streams segments to the client terminal 100, upon the client request, using a streaming protocol (such as the HTTP adaptive streaming protocol, so called HAS, like MPEG-DASH). For the sake of clarity and without limitations, the present principles are described via the use of MPEG-DASH, but they are applicable to any kind of streaming protocol.

As shown in the example of **Figure 2****,** the client terminal 100 can comprise at least:
- an interface of connection 101 (wired and/or wireless, as for example Wi-Fi, Ethernet, 4G, etc.) to the network N;
- a communication circuitry 102 containing the protocol stacks to communicate with the server 300. In particular, the communication module 102 comprises the TCP/IP stack well known in the art. Of course, it could be any other type of network interface and/or communicating means enabling the client terminal 100 to communicate with the server 300;
- a streaming controller 103 which receives the VR video from the server 300;
- a video player 104 adapted to decode and render the multimedia content;
- one or more processor(s) 105 for executing the applications and programs stored in a non-volatile memory of the client terminal 100;
- storing means 106, such as a volatile memory, for buffering the segments received from the server 300 before their transmission to the video player 104;
- an internal bus 107 to connect the various modules and all means well known to the skilled in the art for performing the generic client terminal functionalities.

As an example, the client terminal 100 is a portable media device, a mobile phone, a tablet or a laptop, a head mounted device, a TV set, a set-top box or the like. Naturally, the client terminal 100 might not comprise a complete video player, but only some sub-elements such as the ones for demultiplexing, decoding and rendering the media content and might rely upon an external means to display the decoded content to the end user.

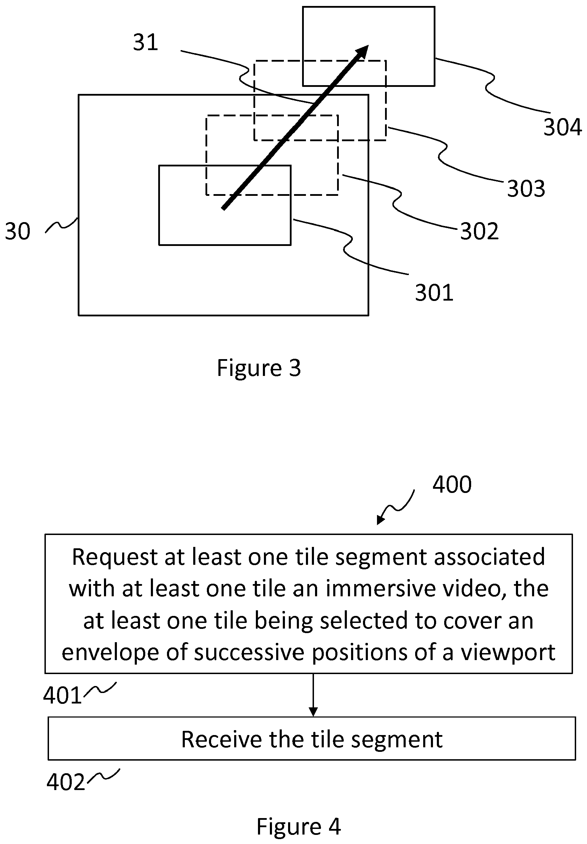

**Figure 3** illustrates an exemplary movement 31 of a viewport according to a specific and non-limiting embodiment. Successive positions 301, 302, 303, 304 of a viewport associated with the client terminal 100 are illustrated in **Figure 3****.** The successive positions 301, 302, 303, 304 of the viewport correspond to a movement 31 of the viewport. **Figure 3** illustrates a movement 31 of a constant direction, but the disclosed principles are equally applicable to any kind of movement of the viewport. The successive positions 301, 302, 303, 304 comprise a first 301, a second 302, a third 303 and fourth 304 positions of the viewport at respectively a first time, a second time, a third time and a fourth time. **Figure 3** further illustrates a dedicated area 30 surrounding the view port. The surrounding area 30 corresponds to the tile segment or the set of tile segments that have been requested and received by the client terminal 100 for rendering a portion of the immersive video. Depending on the spatial tiling of the immersive video, the surrounding area 30 corresponds to either a single tile or a plurality of tiles. For the sake of clarity and without loss of generality, it is considered that the surrounding area 30 corresponds to a single tile. The size and the shape of the surrounding area 30 is chosen so that it includes some provision for movements of the viewport within the surrounding area 30 during a time interval corresponding to a least the duration, d, of a tile segment. For the sake of clarity, the latency between requesting and rendering a tile segment is ignored. But the disclosed principles are equally applicable to other situations by anticipating sending the requests for tile segments by at least a provisioned latency. Referring to **Figure 3****,** and considering rendering a tile segment started at time t (corresponding to the beginning of the tile segment), and considering the user of the client terminal started a movement 31 at time t, the immersive video can be successfully rendered to the user for successive positions 301, 302 of the viewport as long as they remain within the surrounding area 30 during the duration of the tile segment. Once the client terminal detects a movement of the view port in a direction, he can select a next tile corresponding to the detected movement and request the next tile segment associated with the selected tile. But the next tile segment corresponding to the selected tile will be available to the client terminal only at time t+d (considering no latency). If due to the movement 31 of the viewport some of the successive positions of the viewport go outside of the surrounding area 30 within the duration of the tile segment, the corresponding portions of the immersive video cannot be rendered to the user. The rendering of the immersive video will for example be blocked for the remaining of the tile segment at the last position 302 of the viewport, remaining in the surrounding area 30. In another example the immersive video is rendered in a degraded quality for positions of the viewport outside of the surrounding area 30.

Assuming a viewport of width of sixty degrees with a 16/9 aspect ratio, a surrounding area of twice the width and twice the height of the viewport, considering a tile segment of two seconds, and considering a movement of a constant direction of forty-five degrees, as illustrated at **Figure 3****,** the maximum speed allowed (before reaching the border of the surrounding area) is of 11,9 degrees per second. Considering the same viewport and surrounding area sizes, but assuming the viewport is horizontally panning (which represents the most common movement in immersive video navigations), the maximum navigation speed is of 15 degrees per second. Such value is much too low to offer a satisfactory user experience for such horizontal panning navigation mode. Indeed, exploring half of the equatorial landscape, i.e. moving the viewport horizontally by 180°, would take 12 seconds, and exploring the whole equatorial landscape (360° horizontally) would take 24 seconds.

A solution for increasing the maximum allowed speed could be to increase the size of the surrounding area which would represent some additional bandwidth requirement on the delivery network, since a larger surface of the immersive content will be systematically requested by the client terminal for every segment duration.

A salient idea is to build partial views of an immersive video which include only an envelope of successive future positions of a viewport corresponding to specific movements, and therefore excluding parts of the immersive video that are not crossed by the viewport during those specific movements. By requesting such a partial view the client terminal provides an enhanced experience to a user moving according to a specific movement while minimizing the network overhead.

According to the present principles, as shown in **Figure 4****,** the client terminal 100 can be configured to implement the method 400 for receiving an immersive video streamed over a network, the immersive video being spatially tiled with a plurality of tiles, a tile covering a portion of a scene of the immersive video, the immersive video being temporally divided into a plurality of video segments, a video segment comprising a plurality of tile segments, a tile segment being associated with a tile of the plurality of tiles.

The client terminal (e.g. thanks to its streaming controller 103 or processor(s) 105) can request, in a step 401, at least one tile segment associated with at least one tile of the immersive video, the at least one tile being selected to cover an envelope of successive future positions of a viewport during a specific duration, for example during a duration of a tile segment. The successive future positions correspond to estimated positions of the viewport in a short future. Without limitation, several techniques are described here below to determine successive future positions of the viewport, but any technique for predicting successive future positions of the view port over a given duration are compatible with the disclosed principles.

For the sake of clarity, the duration of the movement for determining the envelope of the successive positions is the duration of a tile segment, but the disclosed principles are not limited to the duration of a tile segment and are equally applicable to other types of durations. Other types of durations are for example applicable when considering system with a non-null latency.

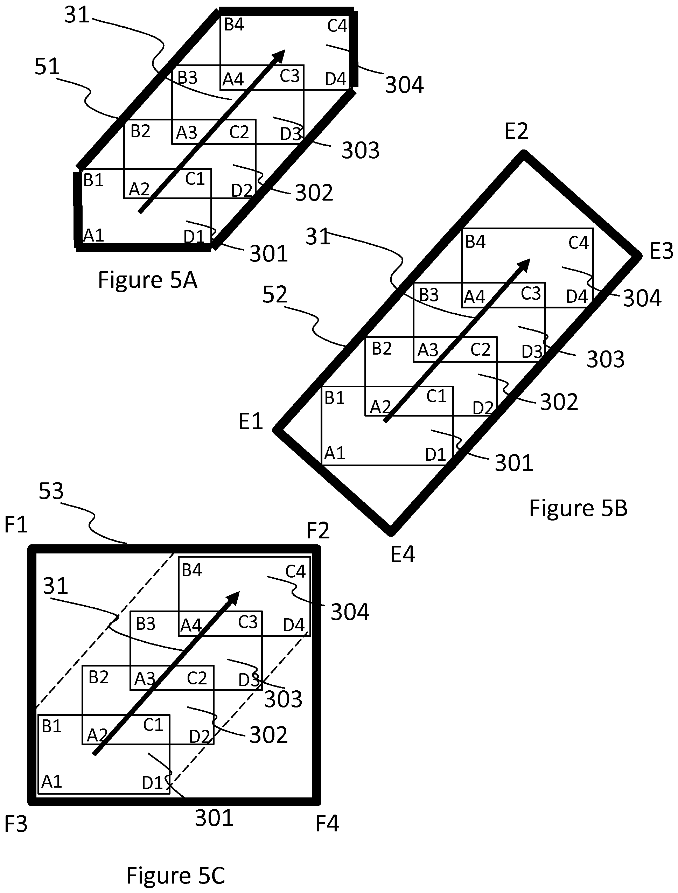

**Figures 5A, 5B and 5C** illustrate three variants of an envelope of successive positions 301, 302, 303, 304 of a viewport during a given duration according to a specific and non-limiting embodiment of the disclosed principles. Similarly to **figure 3****,** **figures 5A, 5B** and **5C** illustrate a first 301, a second 302, a third 303 and fourth 304 positions of the viewport at respectively a first time value, a second time value a third time value and a fourth time value, according to a movement 31. The first 301, second 302, third 303 and fourth 304 positions of the viewport are respectively represented by a first A1B1C1D1 rectangle, a second A2B2C2D2 rectangle, a third A3B3C3D3 rectangle and a fourth A4B4C4D4 rectangle. Considering the envelope is determined for successive positions 301, 302, 303, 304 of the view port over the given duration (i.e. duration of one or more tile segments), the first time value corresponds to the beginning of the given duration (i.e. the beginning of the first tile segment) and the fourth time value corresponds to the end of the given duration (end of last tile segment). Although only four successive positions 301, 302, 303, 304 are illustrated in figures 5A, 5B and 5C, the disclosed principles are not limited to four successive positions and are applicable to any number of successive positions over the given duration. The successive positions 301, 302, 303, 304 of the view port follow a trajectory that corresponds to the movement 31. The movement 31, illustrated in **Figures 5A, 5B** and **5C****,** being of constant direction, the trajectory of the successive positions of the view port is linear. Although the successive positions 301, 302, 303, 304 are illustrated according to a movement 31 of constant direction regularly sampled over time, the disclosed principles are not limited to the illustrated time sampling and the disclosed principles are applicable to successive positions with any time interval between any two of the successive positions. The successive positions 301, 302, 303, 304 of the view port follow a trajectory that corresponds to the movement 31. The movement 31, illustrated in **Figures 5A, 5B** and **5C****,** being of constant direction, the trajectory of the successive positions of the view port is linear. But the disclosed principles are neither limited to a movement of constant direction nor to a linear trajectory of successive positions of the view port, and are applicable to any kind of movement and of corresponding trajectories.

**Figure 5A** illustrates an envelope 51 of successive positions of a viewport according to a first variant of the disclosed principles. The envelope 51 is a polygon A1B1B4C4D4D1 which is a convex geometrical figure comprising at least one vertex of each the rectangles of the successive positions of the viewport. The envelop 51 further comprises three vertexes A1, B1, D1 of the first position 301, and three vertexes B4, C4, D4 of the last position 304 of the successive positions. In other words, the envelop can be the smallest polygon comprising all the successive positions of the viewport during the considered duration. In a variant, the envelop can be a polygon overlapping the smallest polygon (as previously defined) by a constant offset.

**Figure 5B** illustrates an envelope 52 of successive positions of a viewport according to a second variant of the disclosed principles. The envelope 52 is a rectangle E1 E2E3E4 which is also a convex geometrical figure comprising at least one vertex of each the rectangles of the successive positions of the viewport. The rectangle E1E2E3E4 is tilted from the horizon by an angle corresponding to the direction of the movement 31.

**Figure 5C** illustrates an envelope 53 of successive positions of a viewport according to a third variant of the disclosed principles. The envelope 53 is another rectangle F1F2F3F4 which is also a convex geometrical figure but comprising at least one vertex A1, C4 of only some rectangles A1B1C1D1, A4B4C4D4 of the successive positions of the viewport. The rectangle E1E2E3E4 is aligned with the horizon.

The disclosed principles are not limited to the exact forms of the envelopes 51, 52, 53 and any type of envelope, including non-convex envelopes, for which none of the successive positions of the view port crosses the border of the envelope, are compatible with the disclosed principles.

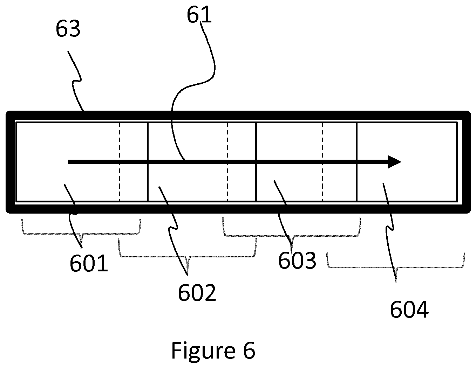

**Figure 6** illustrates an envelope 63 of successive positions of a viewport according to a fourth variant of the disclosed principles. In this variant, the movement 61 of the viewport is a horizontal panning movement. The envelope 63 of the successive viewport positions 601, 602, 603, 604 is the smallest rectangle including all the rectangles of the successive viewport positions 601, 602, 603, 604 during the duration of the tile segment. Compared to requesting a surrounding area as depicted in **Figure 3** and considering a same network overhead, requesting a tile covering the envelope 63 allows to multiply by a factor of four the maximum panning speed, which is thus of 60 degrees per second.

According to a specific and non-limiting embodiment, the successive positions 301, 302, 303, 304 - 601, 602, 603, 604 of the view port are further determined based on a first position 301, 601 of the view port and an estimation of a movement 31, 61 of the viewport from the first position during a given duration. In a first variant the movement 31, 61 is of constant direction and of constant speed. In a first example, both the direction and the speed are predetermined (i.e. they are preconfigured in the client terminal). The predetermined direction is for example horizontal left or horizontal right, which represents very common movements, and the speed is for example 60 degrees per second which provides an increased user experience. In a second example, the constant direction is determined based on an initial position at an initial time and a subsequent position at a subsequent time, the preconfigured speed corresponding to a desired speed. The direction is for example obtained by the vector of the centers of the first and second rectangles corresponding to respectively the initial and subsequent positions of the viewport. In a third example, the speed is not preconfigured but obtained by dividing the distance between the centers of the first and second rectangles by the difference between the subsequent time and the initial time. Assuming a constant direction of the movement (predetermined, or determined based on at least the initial and the subsequent position of the view port), the trajectory of the viewport can be considered linear. Assuming a constant speed of the movement, (predetermined, or determined based on at least the initial and the subsequent positions of the view port), a length of the linear trajectory can be determined for any given time duration. Therefore, successive positions 301, 302, 303, 304 can be determined starting from a first 301 position, linearly translating along a given direction, and over a length depending on a desired speed and a given duration.

In a second variant the movement 31, 61 is of constant direction as for the first variant, and of constant acceleration. In a first example, the acceleration is pre-configured in the client terminal. In a second example, the constant acceleration is determined based on an initial position of the viewport at an initial time, a subsequent position of the viewport at a subsequent time and a further subsequent position of the viewport at a further subsequent time. It is considered in this variant, that the acceleration will remain the average acceleration of the viewport during the duration of the tile segment. Therefore, the successive positions 301, 302, 303, 304 are determined starting from the first position, linearly translating along a given direction, and over a length depending on the initial, subsequent and further subsequent positions of the viewport.

The initial, subsequent (and further subsequent) positions are detected in a tile segment preceding the requested tile segment. Considering a system with no latency, the detected initial and subsequent positions belong to the just preceding tile segment. In case a non-null latency is considered, the detected initial and subsequent positions belong to a previous tile segment preceding the requested tile segment by at least a provisioned latency. The provisioned latency for example takes into account the network latency (maximum time to transmit the request from the client to the server and the maximum time to transmit a tile segment from the server to the client), the server latency (maximum time for the server to transmit a tile segment after having received a request), and the client terminal buffering (either the maximum buffer size or the average buffer filling level). Any technique for estimating a network latency and for anticipating detecting an initial and subsequent positions of the viewport in a preceding tile segment by an estimated latency is compatible with the disclosed principles. Advantageously, the initial and subsequent positions are detected at the temporal end of the preceding tile segment.

In a third variant, the successive positions 302, 303, 304 of the viewport are determined based on the first position 301 and on a prediction of the most likely future positions taking into account past behaviour of the viewer in terms of changes of position, speed and acceleration for the viewport displacements.

In a fourth variant, the successive positions of the viewport are determined based on a current position of the viewport and a position of a point of interest in the immersive video. The positions of various points of interest are for example received by the client terminal as metadata, and the client terminal can select a point of interest being in the neighbourhood of the current position of the view port. In its simplest form, the successive positions of the viewport comprise the current position of the viewport and a final position centred on the selected point of interest. Optionally the successive positions comprise intermediate positions according to a specific movement.

According to a specific and non-limiting embodiment of the disclosed principles, the client terminal selects a tile of the immersive video, covering the envelope determined according to any of the above variants. A description of the spatial tiling of the immersive video is available to the client terminal. For example, the client terminal receives such description in a manifest wherein a tile is described by
- a type of shape for the tile,
- a position of the tile (for example the azimuth and the elevation of the center point of the tile),
- optionally a tilt of the tile (that may correspond to a direction of a movement),
- a size of the tile (for example the azimuth and elevation range of the tile)

In addition, the manifest also provides the URLs of the tile segments associated with the tile, and possibly encoded at different bitrates.

In a first variant, the tiles are large enough to cover an entire viewport plus an additional margin, and the client terminal selects a single tile covering the envelope of the successive positions of the viewport, determined according to any of the above variants. In practice, in case a single tile covering the entire envelope does not exist, the tile providing the maximum coverage is selected. The coverage of the envelope by a given tile can be defined as the intersection of the two surfaces on the sphere corresponding to respectively the envelope and the given tile. For example, for a set of candidate tiles located in the neighborhood of the envelope, the intersection of each candidate tile with the envelope surface is computed and the tile with the largest intersection is selected. The intersection between both surfaces can be practically approximated by sampling points on the sphere and by counting the number of points belonging to any of the surfaces.

In a second variant, the tiles are smaller than the view port, so that a set of tiles is needed to cover at least the viewport. In that variant, the client selects a set of non-overlapping tiles that have an intersection with the envelope. Optionally the tiles having an intersection, with the envelope are sorted according to the importance of the intersection, and the ones having the lowest coverage are not selected. In other words, among the tiles having a non-null intersection with the envelope, only the tiles having the most important coverage are selected. In a first example, the top k tiles are selected, k being an integer value, in a second example, only the tiles having a coverage above a given value are selected.

In a yet another variant, the tiles may have arbitrary coverages. There may be tiles with different sizes, shapes, orientations, some of them, for example taking specific movements into account. Further to determining which tiles individually provide coverage as previously described, the client terminal may select a set of overlapping tiles. For doing so, among a plurality of candidate sets of overlapping tiles that fit a given network bandwidth, the client terminal selects the set of overlapping tiles by computing the coverage of the set of tiles, taking into account the fact that tiles may overlap. From a practical perspective, a sampling approach is used by counting points covered by a first tile, removing these points from the candidate set of tiles covering the envelope, then testing the next tile with remaining points only, and further iterating with the remaining tiles of the candidate set of tiles.

Referring to **Figure 4****,** the client terminal (e.g. thanks to its network interface 101, storage buffer 106 and video player 104) can receive, decode and render, in a step 402, the requested tile segment. As the tile segment corresponds to a tile selected to cover an envelope of successive positions of a viewport along a specific trajectory, a user moving the view port according to a movement corresponding to that trajectory will benefit of an enhanced experience without any additional network overhead. Indeed, if the specific trajectory assumed a movement at high speed, he will be able to move the viewport at that high speed without experiencing any interruption of the immersive video rendering and without needing additional network resources for this enhanced user experience.

According to a specific and non-limiting embodiment of the disclosed principles, a method for receiving an immersive video spatially tiled with a plurality of tiles is disclosed. A tile covers a portion of a scene of the immersive video, the immersive video is temporally divided into a plurality of video segments, a video segment comprises a plurality of tile segments, and a tile segment is associated with a tile of the plurality of tiles. The method comprises:
- requesting at least one tile segment associated with at least one tile of the immersive video, the at least one tile being selected to cover envelope of successive positions of a viewport,
- receiving the at least one tile segment.

In a variant, the successive positions of the view port are determined for a duration of the tile segment.

In another variant, the successive positions of the view port are further determined based on a first position of the view port and a movement of the viewport during the duration of the tile segment.

In yet another variant, the movement of the view port is according to a constant direction and of a constant speed.

In yet another variant, the movement of the viewport is according to a constant direction and of a constant acceleration.

In yet another variant, the constant direction and the constant speed are determined based on the difference between an initial position of the viewport at an initial time and a subsequent position of the viewport at a subsequent time.

In yet another variant, the constant direction and the constant acceleration are determined based on an initial position of the viewport at an initial time, a subsequent position of the viewport at a subsequent time and a further subsequent position of the viewport at a further subsequent time.

In yet another variant, the constant direction is horizontal.

In yet another variant, the movement is predicted according to previous positions of the viewport.

In yet another variant, the successive positions of the view port are determined based on a current position of the view port and a position of a point of interest in the immersive video.

According to another specific and non-limiting embodiment of the disclosed principles, an apparatus is also disclosed. The apparatus comprises:
- a network interface for receiving an immersive video streamed over a network, the immersive video being spatially tiled with a plurality of tiles, a tile covering a portion of a scene of the immersive video, the immersive video being temporally divided into a plurality of video segments, a video segment comprising a plurality of tile segments, a tile segment being associated with a tile of the plurality of tiles;
- means for requesting at least one tile segment associated with at least one tile of the immersive video, the at least one tile being selected to cover an envelope of successive positions of a viewport;
- means for receiving the tile segment.

In another aspect, a computer program product for receiving an immersive video spatially tiled with a plurality of tiles is also disclosed. The computer program product comprises program code instructions executable by a processor for performing the method implemented in any of its variants.

While not explicitly described, the present embodiments may be employed in any combination or sub-combination. For example, the present principles are not limited to the described variants, and any arrangement of variants and embodiments can be used. Moreover, the present principles are not limited to the described adaptive streaming protocols and any other type of delivery protocol is compatible with the disclosed principles. The present principles are not further limited to the described spatial tiling and temporal divisions and any and are applicable to any other types of spatial tiling and temporal segmentations.

Besides, any characteristic, variant or embodiment described for a method is compatible with an apparatus device comprising means for processing the disclosed method, with a device comprising a processor configured to process the disclosed method, with a computer program product comprising program code instructions and with a non-transitory computer-readable storage medium storing program instructions.

## Claims

1. An apparatus (100) comprising:
- a network interface (101) for receiving an immersive video streamed over a network, the immersive video being spatially tiled with a plurality of tiles, a tile covering a portion of a scene of the immersive video, said immersive video being temporally divided into a plurality of video segments, a video segment comprising a plurality of tile segments, a tile segment being associated with a tile of the plurality of tiles;
- means for requesting at least one tile segment associated with at least one tile of the immersive video, the at least one tile being selected to cover an envelope (51, 52, 53, 63) of successive positions (301, 302, 303, 304) of a viewport;
- means for receiving the tile segment.

2. A method (400) for receiving an immersive video spatially tiled with a plurality of tiles, a tile covering a portion of a scene of the immersive video, said immersive video being temporally divided into a plurality of video segments, a video segment comprising a plurality of tile segments, a tile segment being associated with a tile of the plurality of tiles,
said method comprising:
- requesting (410) at least one tile segment associated with at least one tile of the immersive video, the at least one tile being selected to cover envelope (51, 52, 53, 63) of successive positions (301, 302, 303, 304) of a viewport,
- receiving (402) the at least one tile segment.

3. The apparatus according to claim 1 or the method according to claim 2, wherein the successive positions (301, 302, 303, 304) of the view port are determined for a duration of the tile segment.

4. The apparatus or the method according to claim 3, wherein the successive positions (301, 302, 303, 304) of the view port are further determined based on a first position (301) of the view port and a movement (31, 61) of the viewport during the duration of the tile segment.

5. The apparatus or the method according to claim 4, wherein the movement (31, 61) of the view port is according to a constant direction and of a constant speed.

6. The apparatus or the method according to claim 4, wherein the movement (31, 61) of the viewport is according to a constant direction and of a constant acceleration.

7. The apparatus or the method according to claim 5, wherein the constant direction and the constant speed are determined based on the difference between an initial position of the viewport at an initial time and a subsequent position of the viewport at a subsequent time.

8. The apparatus or the method according to claim 6, wherein the constant direction and the constant acceleration are determined based on an initial position of the viewport at an initial time, a subsequent position of the viewport at a subsequent time and a further subsequent position of the viewport at a further subsequent time.

9. The apparatus or the method according to claim 4, wherein the constant direction is horizontal.

10. The apparatus or the method according to claim 4, wherein the movement is predicted according to previous positions of the viewport.

11. The apparatus according to any of claims 1 or 3 to 10 or the method according to any of claims 2 to 10, wherein the successive positions of the view port are determined based on a current position of the view port and a position of a point of interest in the immersive video.

12. A computer program product comprising program code instructions executable by a processor for executing the method according to any of claims 2 to 11.
